# EUROPEAN PATENT SPECIFICATION

(11) **EP 3 747 571 B1**
(45) Date of publication and mention of the grant of the patent: **29.11.2023**
(21) Application number: 20178300.8
(22) Date of filing: 04.06.2020
(51) Int. Cl.: B22F 3/105, B22F 10/28, B22F 10/37, B22F 10/38, B22F 12/90, B29C 64/153, B29C 64/393, B33Y 50/00, B33Y 50/02, G01B 11/24, G06N 3/08, B22F 12/60

(54) **POWDER BED FUSION MONITORING**
ÜBERWACHUNG DES PULVERBETTSCHMELZVERFAHRENS
SURVEILLANCE DE LA FUSION SUR LIT DE POUDRE

(30) Priority: 07.06.2019 US 201962858558 P
(43) Date of publication of application: 09.12.2020
(73) Proprietor: RTX Corporation, Farmington, CT 06032 (US)
(72) Inventor: BENNETT, Michael Walter, Lebanon, CT 06249 (US); HIHEGLO, Eklou E., Manchester, CT 06042 (US); RUNKLE, Rebecca L., Manchester, CT 06040 (US); SURANA, Amit, West Hartford, CT 06107 (US); MORGANSON, David W., Marlborough, CT 06447 (US)
(74) Representative: Dehns

(56) References cited:
- WO-A1-2018/234331
- DE-A1-102017 124 100
- US-A1- 2017 326 867
- ZHONGWEI LI ET AL: "In Situ 3D Monitoring of Geometric Signatures in the Powder-Bed-Fusion Additive Manufacturing Process via Vision Sensing Methods", SENSORS, vol. 18, no. 4, 12 April 2018 (2018-04-12) , page 1180, XP055712171, DOI: 10.3390/s18041180
- Yue Liu ET AL: "In-situ areal inspection of powder bed for electron beam fusion system based on fringe projection profilometry", Additive Manufacturing, 8 November 2019 (2019-11-08), XP055724888, Retrieved from the Internet: URL:https://reader.elsevier.com/reader/sd/ pii/S2214860419305123?token=FB954AD859DB1F 736E901E05D180810029C54959424EAF05086439B9 6FD403C2F17832D59737338067BADEB8431D6006 [retrieved on 2020-08-25]

## Description

### BACKGROUND

The present invention relates to additive manufacturing. More particularly, the present invention relates to monitoring an additive manufacturing build process.

Powder bed fusion additive manufacturing processes offer a technique capable of manufacturing a myriad of aerospace components and assemblies. The additive manufacturing process operates through repeated application of broad powder layers and then subsequent fusion of specific areas of powder to form a three dimensional workpiece. Currently, methods are insufficient for either validating that a powder layer is acceptable or for making corrections to the powder layer if the powder layer is unacceptable. Current methods to establish acceptability windows are unable to assess the type and degree of severity of a defect in a powder layer.

DE 10 2017 124100 A1 discloses processes and devices for the additive manufacturing of workpieces.

WO 2018/234331 A1 discloses a method and device for additive manufacturing.

Zhongwei Li et al. DOI: 10.3390/s18041180 discloses in situ 3D monitoring of geometric signatures in the powder-bed-fusion additive manufacturing process via vision sensing methods.

### SUMMARY

In accordance with a first aspect of the invention, a method of monitoring an additive manufacturing build process is provided in accordance with claim 1.

Features of embodiments are recited in the dependent claims.

The present summary is provided only by way of example, and not limitation. Other aspects of the present disclosure will be appreciated in view of the entirety of the present disclosure, including the entire text, claims, and accompanying figures.

### BRIEF DESCRIPTION OF THE DRAWINGS

FIG. 1A is a side view of a powder bed of an additive manufacturing system.
FIG. 1B is a top view of the powder bed of the additive manufacturing system.
FIG. 2A is a simplified schematic diagram of components used in a first phase of a method of monitoring an additive manufacturing build process.
FIG. 2B is a simplified schematic diagram of components used in a second phase of a method of monitoring an additive manufacturing build process.

### DETAILED DESCRIPTION

The proposed disclosure utilizes a high precision laser profilometer to scan the powder bed as it is being formed, and combining profilometer data with data from a camera to create a machine learning algorithm to actively monitor the build process layer-by-layer.

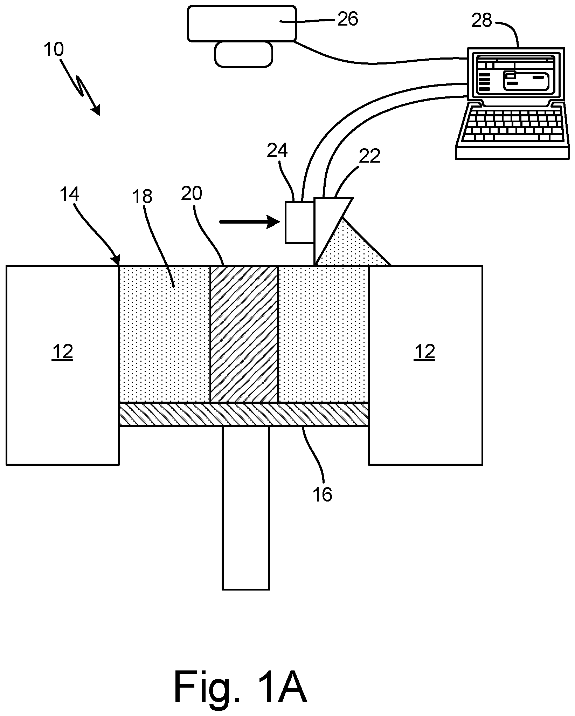

FIG. 1A is a side cross-section view of additive manufacturing system 10 and shows container walls 12, powder bed 14, build plate 16, powdered material 18, workpiece 20, recoater 22, profilometer 24, camera 26, and computer 28.

Additive manufacturing system 10 is a machine configured to produce objects with layer-by-layer additive manufacturing. In some non-limiting embodiments, additive manufacturing system 10 can be configured for laser additive manufacturing, laser powder bed fusion, electron beam powder bed fusion, laser powder deposition, and/or selective laser sintering to create a three-dimensional object out of powdered material 18. Container walls 12 are containment walls that help to contain the four sides of powder bed 14. Powder bed 14 includes build plate 16, powdered material 18, and workpiece 20. Build plate 16 is a platform that is configured to move in a vertical direction (up and down as shown in FIG. 1A.). Powdered material 18 is feedstock material in powdered form. In some non-limiting embodiments, powdered material 18 can be or include titanium alloys, nickel alloys, aluminum alloys, steel alloys, cobalt-chrome alloys, copper alloys, or other types of powdered metal alloys. In other non-limiting embodiments, powdered material can include polymer powder. Workpiece 20 is an object being constructed by the layer-by-layer additive manufacturing process of additive manufacturing system 10.

Recoater 22 is a powder wiping device. In this example, recoater 22 can include a knife-blade, a roller, a brush, and a piece of rubber, used alone or in combination. Profilometer 24 is an instrument for measuring a surface profile or topography. In this non-limiting embodiment, profilometer 24 is a non-contact, laser profilometer. Camera 26 is a device for optically capturing a photographic image. Computer 28 is an electronic control device such as a desktop computer.

Container walls 12 are disposed on the sides of and are in contact with powdered material 18 of powder bed 14. Powder bed 14 is positioned below camera 26. Build plate 16 is positioned between container walls 12 and is in contact with the bottom sides of powdered material 18 and workpiece 20. Powdered material 18 is disposed on build plate 16 and between container walls 12. Workpiece 20 is disposed in and surrounded by a portion of powdered material 18 and sits upon build plate 16. Recoater 22 is positioned above build plate 16 and is configured to move relative to powdered material 18. In this example, recoater 22 is electrically connected to computer 28 via wires. In another example, recoater 22 is not electrically connected to computer 28 via wires, but instead can include a battery pack, Bluetooth communication means, and/or internal storage. In one non-limiting embodiment, recoater 22 can include and/or be attached to a powder distributing component such as a powder distribution piston.

In this example, profilometer 24 is attached to a side of recoater 22. In this non-limiting embodiment, profilometer 24 is mounted to recoater 22 such that profilometer 24 follows recoater 22 as recoater 22 moves across powder bed 14. In another non-limiting embodiment, profilometer can be mounted on the other side of recoater 22, such that profilometer leads ahead of recoater 22 as recoater 22 moves across powder bed 14. In this example, profilometer 24 is electrically connected to computer 28 via wires. In other non-limiting embodiments, profilometer 24 can be mounted onto an independent actuation system separate from recoater 22. Camera 26 is mounted above powder bed 14. In this example, camera 26 is also electrically connected to computer 28 via wires. In other non-limiting embodiments, camera 26 can include internal storage. Computer 28 is positioned away from powder bed 14 and is in data communication with recoater 22, profilometer 24, and camera 26.

Container walls 12 contain powdered material 18 within powder bed 14. Powder bed 14 is used to form workpiece 20 from powdered material 18 by way of selectively solidifying portions of powdered material 18. Build plate 16 functions as a base upon which powdered material 18 is placed and that supports workpiece 20. As workpiece 20 is formed, build plate 16 lowers after each layer of workpiece 20 is iteratively formed. Powdered material 18 serves as feedstock or raw material from which workpiece 20 is solidified and formed. After a layer powder spreading step, recoater 22 is drawn across a top surface of powder bed 14 to wipe or scrape a portion of powdered material 18 from powder bed 14. In this example, recoater 22 moves from left to right (as shown in FIG. 1A).

In this example, profilometer 24 scans across powder bed 14 during the recoating process to capture a topographical profile from the top surface of powder bed 14. Profilometer 24 emits a laser beam that is reflected off of powdered material 18 and workpiece 20. The reflected beam is then captured by a detector on profilometer 24. Based on an angle and time of return of the beam and a location on the detector, sensor software can determine how far the surface of powder bed 14 is away from profilometer 24. In this way, a high-resolution two dimensional picture of the surface of powdered bed 14 can be created. Here, given that profilometer 24 scans across powder bed 14 as profilometer 24 moves with recoater 22, profilometer 24 can capture a three-dimensional map of various surface heights of powder bed 14 as powder bed 14 is recoated with powder.

Camera 26 takes a picture of powder bed 14, both before and after additive manufacturing system 10 recoats a new layer of powder onto powder bed 14. Computer 28 controls and receives communications from the various components of additive manufacturing system 10. In this example, computer 28 also stores a machine learning algorithm that is used, in conjunction with the data from profilometer 24 and camera 26, to actively monitor the additive manufacturing build-process layer by layer.

Additive manufacturing system 10 utilizes profilometer 24 to scan powder bed 14 as powder bed 14 is being formed by the additive manufacturing layer powder spreading process. Profilometer 24 allows for capture of a very detailed and quantitative assessment of the surface of powder bed 14. Camera 26 then captures an image of powder bed 14 after the layer spreading is complete. Profilometer 24 measures deviations from a nominal model and outputs relative height data. The height data is then used for training the machine learning algorithm that is then used to monitor data from the entirety of powder bed 14 using data from camera 26. Deviations picked up by camera 26, but found to be below a numerical threshold set by profilometer 24, can be labeled as nominal in a set of training data.

In this way, the machine learning algorithm can screen out indications that are quantitatively inconsequential before reporting out defects of the layer of powder. This methodology can also be used for quantifying varying levels the impact of a defect has in the powder layer. For example, training data from camera 26 can have an additional severity level if the additional severity level is registered to profilometer 24. Profilometer 24 can also be used in tandem with camera 26 and the machine learning algorithm during an actual additive manufacturing build process to provide additional insight to the output of the machine learning algorithm. The proposed machine learning algorithm is unique and novel in that the machine learning algorithm is able to make quantitative and comparative assessments and make robust determinations on the severity of indications. Utilization of profilometer 24 enables the machine learning algorithm to be calibrated so that a user can go forward and just use data from camera 26 to monitor the build process during a production phase, instead of parsing through thousands of pictures after the build process is completed.

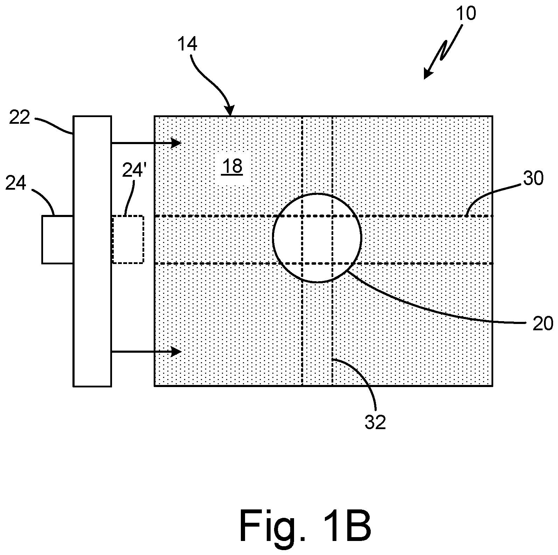

FIG. 1B is a top view of additive manufacturing system 10 and shows powder bed 14, powdered material 18, workpiece 20, recoater 22, profilometer 24, profilometer 24' (shown in phantom), scan path 30 of profilometer 24, and indication 32.

Scan path 30 is a path of a scanning pattern of profilometer 24 (and/or in this example shown in FIG. 1B of profilometer 24'). Scan path 30 represents an amount of area of powder bed 14 that is scanned by profilometer 24. Indication 32 is a portion of powder bed 14 that includes some sort of deviation characteristic in powder bed 14. For example, indication 32 can signal an undesirable characteristic or defect in the condition of powdered material 18 and/or workpiece 20 in powder bed 14. In this example, a defect in powder bed 14 can include one or more of streaking in powdered material 18, hopping of recoater 22, workpiece 20 becoming exposed through the powder layer, chips or flecks from recoater 22, and incomplete spreading on the powdered lay upon powder bed 14.

Here in FIG. 1B, profilometer 24' is shown as being mounted on an opposite side of recoater 22 from profilometer 24. In this example, profilometer 24' is scanning powder bed 14 before recoater 22 recoats the top layer of powder on powder bed 14, with recoater 22 moving in a left-to-right direction as recoater 22 recoats powder bed 14. In another example, additive manufacturing system 10 can include both profilometers 24 and 24' to allow for scanning powder bed 14 on both sides of recoater 22. This dual-profilometer setup can be utilized in conjunction with a recoater that is configured to recoat in both directions (e.g., left-to-right and right-to-left as shown in FIG. 1B). Here, recoater 24' scans powder bed 14 before recoater 22 coats a new layer of powder onto powder bed 14, while recoater 24 scans powder bed 14 after recoater 22 coats a new layer of powder onto powder bed 14.

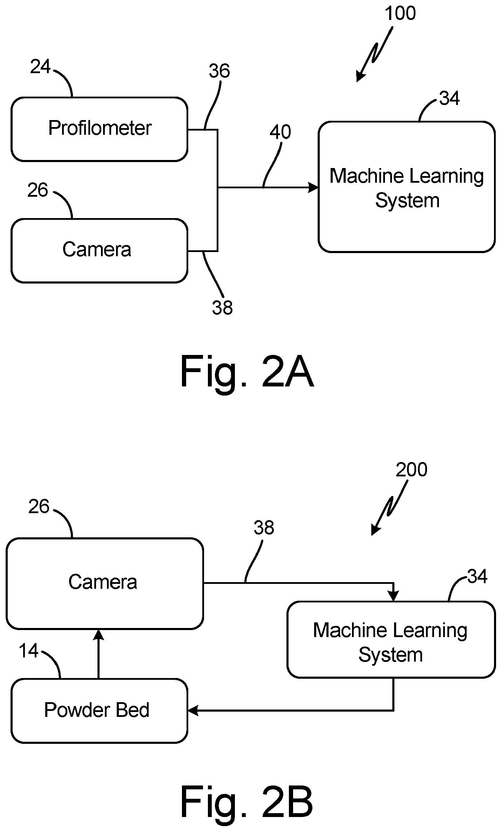

In one non-limiting embodiment, a method of monitoring an additive manufacturing build process of workpiece 20 using additive manufacturing system 10 includes two phases (e.g., the first phase illustrated in FIG. 2A and the second phase illustrated in FIG. 2B). FIG. 2A is a simplified schematic diagram of components used in the first phase of the method of monitoring the additive manufacturing build process. FIG. 2A shows system 100 with profilometer 24, camera 26, and machine learning system 34, as well as profilometer data 36, camera data 38, and first data set 40. As described herein with respect to figures 2A and 2B, the term "profilometer 24" is synonymous with the term "profilometer 24 and/or profilometer '24."

Machine learning system 34 includes an algorithm as a set of rules or executable instructions to be followed by a computer (e.g., computer 28) for problem solving applications. Profilometer data 36 is a set of data produced by profilometer 24. In this example, profilometer data 36 represents a topological profile of a portion of powder bed 14 that is scanned by profilometer 24 (i.e., scan path 30). Camera data 38 is a set of data produced by camera 26. In this example, camera data 38 represents an optical image or photograph of powder bed 14. First data set 40 is a combined set of data that includes both profilometer data 36 and camera data 38. Machine learning system 34 is stored on a computer chip or memory of a computer such as computer 28. Profilometer data 36 is communicated from profilometer 24 to computer 28 and is input into machine learning system 34. Camera data 38 is communicated from camera 26 to computer 28 and is input into machine learning system 34.

In this example, machine learning model 34 can be built by gathering sets of data, such as profilometer data 36 and camera data 38 that include various types of defects of powder bed 14. Some examples of defects can include streaking of powdered material 18, recoater hopping, exposed of workpiece 20 through recoated powder layer, recoater chips, incomplete spreading, and the like. A database of images (e.g., camera data 38) and associated topologies (e.g., profilometer data 36) that have a bunch of these powder bed defects is built. A grid is then put on the database of images and associated topologies and each aspect of the grid is labelled as a "defect" or "no defect." Such labelling of the grid of images and associated topologies is then used to train a classification model to be used to look at new data sets and determine whether there is a defect in powder bed 14 by using an algorithm (e.g., machine learning system 34). In one non-limiting embodiment, various severity level classifications can be designated such as low, medium, and high in addition to labeling each patch by the type of defect (e.g., streaking, hopping, incomplete spreading, etc.).

First data set 40 is compared to a nominal model of powder bed 14, with the nominal model of powder bed 14 including a uniform topography profile across each layer of powder bed 14. For example, profilometer 24 measures any deviations in the layers of powder bed 14 from the nominal model, such as at the location of indication 32. Profilometer 24 then outputs relative height data between the nominal model and the topological profile of powder bed 14. The relative height data from profilometer 24 (e.g., profilometer data 36) is then combined with camera data 38 so as to classify different regions in an image of powder bed 14 to be nominal or as having a specific type of defect (e.g. streaking, debris, incomplete spreading, etc.). In this way, machine learning system 34 can be trained by incorporating measured deviations to form a classification model. In one non-limiting embodiment, machine learning system 34 is trained by being given training examples (e.g., pairs of image regions) and class labels (nominal, streaking, debris, etc.) in order to build a discriminative model (e.g. through the use of a neural network) to learn how to map particular image regions to a particular class or type of defect found in powder bed 14.

In this first phase of method of monitoring the additive manufacturing build process of workpiece 20 using additive manufacturing system 10, a layer of powder is deposited onto powder bed 14. A topographical profile of a portion of powder bed 14 is captured with profilometer 24. Specifically, a topography of a portion of a first layer of powder bed 14 is captured by profilometer 24 and the topographical profile comprising data points corresponding to the topography of the portion of the first layer of powder bed 14 is created. An image of powder bed 14 is captured with camera 26. The image (i.e., camera data 38) and the topographical profile (i.e., profilometer data 36) are combined to create first data set 40. First data set 40 is transferred to machine learning system 34. A set of training data is generated based on first data set 40. The set of training data includes a nominal model of powder bed 14 and a set of deviations from the nominal model of powder bed 14.

FIG. 2B is a simplified schematic diagram of components in system 200 used in the second phase of the method of monitoring the additive manufacturing build process and shows powder bed 14, camera 26, and machine learning system 34. In this second phase of the method of monitoring the additive manufacturing build process of workpiece 20, a layer of powder is deposited onto a second powder bed with the additive manufacturing system 10. The second powder bed can be the same or different powder bed as powder bed 14. With respect to FIG. 2B, the term "powder bed 14" is synonymous with the term "a second powder bed or powder bed 14".

An image of powder bed 14 is captured with camera 26. The image of powder bed 14 is compared to the set of training data. A set of deviations from a nominal model of the first powder bed is determined. Any deviations from the set of deviations that are greater than a numerical threshold are labelled and identified as a defect. Any deviations that are less than or equal to the numerical threshold are screened out of the set of deviations. Additionally, a severity of any identified defects can be determined and assigned to the particular defect. For example, the criteria for classifying defects and therefore setting numerical threshold values can be based on the amount of deviation from nominal, the size of a singular continuous defect, and the total size of a defect compared to the area evaluated. If the defect type and size are relevant enough to impact the quality of workpiece 20, additive manufacturing system 10 can take necessary action(s) such as correcting the powder layer via recoating or by aborting the build process outright. In another example, corrective action can be taken to modify the laser parameters to accommodate the powder bed defect.

In another non-limiting embodiment not covered by the claims, a method of monitoring an additive manufacturing process includes scanning a topography of a layer of powder bed 14 with profilometer 24 that is operatively coupled to additive manufacturing system 10. Deviations from a nominal model of the layer of powder bed 14 are measured by comparing a measured height of the layer of powder bed 14 to a height of the nominal model. The deviations are measured in order to determine relative height data between the scanned layer of powder bed 14 and the nominal model. The relative height data is output into machine learning system 34 in order to train machine learning system 34. Images of powder bed 14 are captured to create camera data 38. Powder bed 14 is monitored by using camera data 38. A deviation in camera data 38 is identified based on machine learning system 34. An acceptability of the deviation is determined by comparing a value of the deviation to a pre-set numerical threshold. If the value of the deviation is less than or equal to the pre-set numerical threshold, the deviation is screened out. If the value of the deviation is greater than the pre-set numerical threshold, the deviation is added to a data set.

A benefit of additive manufacturing system 10 with profilometer 24 and machine learning system 34 is that quantitative assessments about the condition of the entirety of powder bed 14 are enabled, resulting in enhanced decision making when it comes to deciding if powder bed 14 is acceptable or not. The ability to identify a specific size of a detected presence of an off-nominal area of powder bed 14 is critical because, for example, 10 micron indications may not be important while 10 mm indications typically are important. What's more, existing methods do not classify a type of powder bed anomaly, the classification of which could help drive different corrective actions. For instance, hopping of recoater 22 may indicate the onset of a more severe problem, while super-elevation (e.g., when a workpiece warps or curls upwards) often indicates a serious build issue and potentially an impending build failure. Some anomalies such as part failure or debris may indicate flaws in the final part, while others, such as recoater streaking or incomplete spreading can suggest damage to the additive manufacturing machine itself.

Here, the quantitative data provided by additive manufacturing system 10 promotes a more efficient use of corrective measures when indications are detected. Additionally, when machine learning system 34 determines that the size of a defect will result in poor part quality and cannot be fixed via post-build processing, then additive manufacturing system 10 can cancel the build process prematurely thereby saving time and money that would otherwise be spent repairing/finishing workpiece 20 and potentially scrapping workpiece 20 later during final inspection.

## Claims

1. A method of monitoring an additive manufacturing build process of a workpiece (20) using an additive manufacturing system (10) comprising a first powder bed (14) and a recoater (22) configured to coat the first powder bed (14) with a layer of powder, the method comprising:
a first phase comprising:
depositing a first layer of powder onto the first powder bed (14) of the additive manufacturing system (10);
scanning, with a profilometer (24, 24'), a topography of a portion of the first layer of the powder bed (14); and
creating a topographical profile (36) of the portion of the first layer, the topographical profile (36) comprising data points corresponding to the topography of the portion of the first layer of the powder bed (14);
capturing an image (38) of the first powder bed (14) with a camera (26);
combining the image (38) and the topographical profile (36) to create a first data set (40);
transferring the first data set (40) to a machine learning model (34); and
generating, with the machine learning model (34), a set of training data based on the first data set (40); and
a second phase comprising:
depositing a second layer of power onto a second powder bed (14) with the additive manufacturing system (10);
capturing an image (38) of the second powder bed (14) with the camera (26);
comparing the image (38) of the second powder bed (14) to the set of training data;
determining a set of deviations from a nominal model of the first powder bed (14) based on comparison of the image (38) of the second powder bed (14) to the set of training data, wherein the deviations are measured by comparing a measured height of the layer of the powder bed (14) to a height of the nominal model;
labelling a deviation from the set of deviations that is greater than a numerical threshold; and
identifying the deviation that is greater than the numerical threshold as a defect.

2. The method of claim 1, wherein the training data comprises:
a nominal model of the powder bed (14); and
a set of deviations from the nominal model of the powder bed (14).

3. The method of claim 1 or 2, further comprising:
screening any deviations that are less than or equal to the numerical threshold out of the set of deviations.

4. The method of any preceding claim, further comprising:
determining a severity of the defect based on a degree of deviation from nominal and a size of the defect; and
assigning a severity classification to the defect based on the determined severity of the defect.

## Patentansprüche

1. Verfahren zur Überwachung eines additiven Fertigungsaufbauprozesses eines Werkstücks (20) unter Verwendung eines additiven Fertigungssystems (10), umfassend ein erstes Pulverbett (14) und einen Wiederbeschichter (22), der zum Beschichten des ersten Pulverbetts (14) mit einer Pulverschicht konfiguriert ist, wobei das Verfahren Folgendes umfasst:
eine erste Phase, umfassend:
Aufbringen einer ersten Pulverschicht auf das erste Pulverbett (14) des additiven Fertigungssystems (10);
Scannen einer Topografie eines Abschnitts der ersten Schicht des Pulverbetts (14) mit einem Profilometer (24, 24'); und
Erstellen eines topografischen Profils (36) des Abschnitts der ersten Schicht, wobei das topografische Profil (36) Datenpunkte umfasst, die der Topografie des Abschnitts der ersten Schicht des Pulverbetts (14) entsprechen;
Aufnehmen eines Bildes (38) des ersten Pulverbetts (14) mit einer Kamera (26);
Kombinieren des Bildes (38) und des topografischen Profils (36) zum Erstellen eines ersten Datensatzes (40);
Übertragen des ersten Datensatzes (40) an ein Modell für maschinelles Lernen (34); und
Erzeugen eines Satzes von Trainingsdaten basierend auf dem ersten Datensatz (40) mit dem Modell für maschinelles Lernen (34); und
eine zweite Phase, umfassend:
Aufbringen einer zweiten Pulverschicht auf ein zweites Pulverbett (14) mit dem additiven Fertigungssystem (10);
Aufnehmen eines Bildes (38) des zweiten Pulverbetts (14) mit der Kamera (26);
Vergleichen des Bildes (38) des zweiten Pulverbetts (14) mit dem Satz von Trainingsdaten;
Bestimmen eines Satzes von Abweichungen von einem Soll-Modell des ersten Pulverbetts (14) basierend auf einem Vergleich des Bildes (38) des zweiten Pulverbetts (14) mit dem Satz von Trainingsdaten, wobei die Abweichungen durch Vergleichen einer gemessenen Höhe der Schicht des Pulverbetts (14) mit einer Höhe des Soll-Modells gemessen werden;
Kennzeichnen einer Abweichung aus dem Satz von Abweichungen, die größer als ein numerischer Schwellenwert ist; und
Identifizieren der Abweichung, die größer als der numerische Schwellenwert ist, als Fehler.

2. Verfahren nach Anspruch 1, wobei die Trainingsdaten Folgendes umfassen:
ein Soll-Modell des Pulverbetts (14); und
einen Satz von Abweichungen von dem Soll-Modell des Pulverbetts (14) .

3. Verfahren nach Anspruch 1 oder 2, ferner umfassend:
Aussortieren aller Abweichungen, die kleiner als der oder gleich dem numerischen Schwellenwert sind, aus dem Satz von Abweichungen.

4. Verfahren nach einem der vorhergehenden Ansprüche, ferner umfassend:
Bestimmen eines Schweregrads des Fehlers basierend auf einem Grad der Abweichung vom Soll-Wert und einer Größe des Fehlers; und
Zuweisen einer Schweregradklassifizierung für den Fehler basierend auf dem bestimmten Schweregrad des Fehlers.

## Revendications

1. Procédé de surveillance d'un processus de fabrication additive d'une pièce (20) à l'aide d'un système de fabrication additive (10) comprenant un premier lit de poudre (14) et un dispositif de recouvrement (22) configuré pour revêtir le premier lit de poudre (14) avec une couche de poudre, le procédé comprenant :
une première phase comprenant :
le dépôt d'une première couche de poudre sur le premier lit de poudre (14) du système de fabrication additive (10) ;
le balayage, avec un profilomètre (24, 24'), d'une topographie d'une partie de la première couche du lit de poudre (14) ; et
la création d'un profil topographique (36) de la partie de la première couche, le profil topographique (36) comprenant des points de données correspondant à la topographie de la partie de la première couche du lit de poudre (14) ;
la capture d'une image (38) du premier lit de poudre (14) avec une caméra (26) ;
la combinaison de l'image (38) et du profil topographique (36) pour créer un premier ensemble de données (40) ;
le transfert du premier ensemble de données (40) vers un modèle d'apprentissage automatique (34) ; et
la génération, avec le modèle d'apprentissage automatique (34), d'un ensemble de données d'entraînement sur la base du premier ensemble de données (40) ; et
une seconde phase comprenant :
le dépôt d'une seconde couche de poudre sur un second lit de poudre (14) avec le système de fabrication additive (10) ;
la capture d'une image (38) du second lit de poudre (14) avec la caméra (26) ;
la comparaison de l'image (38) du second lit de poudre (14) à l'ensemble de données de formation ;
la détermination d'un ensemble d'écarts par rapport à un modèle nominal du premier lit de poudre (14) sur la base d'une comparaison de l'image (38) du second lit de poudre (14) à l'ensemble de données de formation, dans lequel les écarts sont mesurés en comparant une hauteur mesurée de la couche du lit de poudre (14) à une hauteur du modèle nominal ;
l'étiquetage d'un écart par rapport à l'ensemble d'écarts qui est supérieur à un seuil numérique ; et
l'identification de l'écart qui est supérieur au seuil numérique comme un défaut.

2. Procédé selon la revendication 1, dans lequel les données de formation comprennent :
un modèle nominal du lit de poudre (14) ; et
un ensemble d'écarts par rapport au modèle nominal du lit de poudre (14).

3. Procédé selon la revendication 1 ou 2, comprenant en outre :
le filtrage de tous les écarts qui sont inférieurs ou égaux au seuil numérique parmi l'ensemble d'écarts.

4. Procédé selon une quelconque revendication précédente, comprenant en outre :
la détermination d'une gravité du défaut sur la base d'un degré d'écart par rapport à la valeur nominale et d'une taille du défaut ; et
l'attribution d'une classification de gravité au défaut sur la base de la gravité déterminée du défaut.
